# EUROPEAN PATENT SPECIFICATION

(11) **EP 2 714 996 B1**
(45) Date of publication and mention of the grant of the patent: **06.12.2017**
(21) Application number: 11866024.0
(22) Date of filing: 22.05.2011
(51) Int. Cl.: E02B 15/04, B63B 35/44, B63B 35/32

(54) **A METHOD AND APPARATUS FOR LOOSENING OIL FROM ICE**
VERFAHREN UND VORRICHTUNG ZUM LÖSEN VON ÖL AUS EIS
PROCÉDÉ ET APPAREIL POUR DÉTACHER DE L'HUILE À PARTIR DE GLACE

(43) Date of publication of application: 09.04.2014
(73) Proprietor: Oilwhale Oy, 21630 LIELAHTI TL (FI)
(72) Inventor: JÄRVINEN, Markku, FI-21630 Lielahti TL (FI)
(74) Representative: Pirhonen, Kari Lennart
(86) International application number: PCT/FI2011/000027
(87) International publication number: WO 2012/160239

(56) References cited:
- WO-A1-92/20572
- CA-A1- 2 314 066
- US-A- 3 878 804
- US-A- 4 053 406
- US-A- 4 595 510

## Description

### OBJECT OF THE INVENTION

The object of the invention being presented is a method and apparatus for loosening oil that has become adhered or affixed to ice in cold conditions.

### PRIOR ART

As the intensity of oil exploration and transportation of oil increases in Arctic regions, also the risk of oil disasters occurring in these areas has substantially increased. It has been observed that all known methods and equipment for removing oil are intended for open water, and no effective method and equipment exist for removing oil from among ice. This is mainly caused by the fact that oil clings tightly to pieces of ice and slush, which makes it extremely difficult to loosen and remove the oil from pieces of ice.

Depending on the temperature and the quality of the material spilled into water, oil among ice can be almost solid in form, which makes it impossible to convey it by pumping. In such a case the only way to remove the material from a body of water is often the application of scoops, shovels or similar hand tools by which oil and oily pieces of ice and blocks of ice are collected from the water into a collection tank of a recovery vessel. Transporting blocks of ice away is not a very effective way of combatting an oil spill, however.

There have been attempts to remove oil from pieces of ice by mechanical apparatuses, such as brushes, but this has not proven very effective either. The problem with brush apparatuses is that generally the brushes can only sweep oil located on the upper surface of an ice sheet. Because the temperature of the ice's surface under an oil layer is generally several degrees Celcius below zero, only very little of the oil which is in a near-solid form can be recovered. Only the oil layer on the underwater surface of the ice block will somewhat adhere to brush apparatuses, but even so collecting large quantities of oil is slow and not very cost efficient.

As it has been observed that solely mechanical solutions will not solve the problem, attempts have been made to loosen oil on the surface of ice also by means of high-pressure water jets, hot water and hot steam. Another attempt to separate oil from pieces of ice involves the melting of the pieces of ice collected in a collection tank by heating up water contained in the collection tank or by spraying high-pressure steam into among the ice. Once the ice pieces have melted, the oil and the water can be separated from each other. This, however, yields a lot of water but little oil, which is not very efficient.

Furthermore, heating up the water requires high thermal power and consumes a lot of energy, and even so the ice will melt slowly, which makes it impossible to maintain such a process in maritime conditions and to melt large quantities of ice.

By using water in its various forms it has indeed been possible to loosen some oil from the surface of ice, but this also produces a large volume of problematic water and oil emulsion, i.e. a milky mixture of a large quantity of water and a small quantity of oil. The emulsion cannot be collected by means of brush apparatuses because it adheres poorly to mechanical brush apparatuses. Therefore the water and oil must be separated by means of a separation process, as international conventions prohibit the discharging of water from a recovery tank back to a body of water without separation. The separation process must achieve an oil consistency of less than 12 ppm/ml in water. As a method, however, separation is complicated and slow and consumes a lot of energy. The separation of oil and water can take several hours, even days. Thus a recovery vessel would need several powerful separators for separation, and the separation capacity would dictate the oil recovery capacity of the vessel. This would make oil recovery slow, costly and inefficient.

The patent publications US 7,785,035 B2 and US 4,053,406 present a separation systems installed on a recovery vessel making it possible to loosen at least some of the oil on the surface of blocks of ice. US-A-4 053 406 discloses a method and a vessel with an apparatus for loosening oil that has adhered or become affixed to ice in cold conditions having the features of the preamble of claim 1 respectively claim 9. In US 7,785,035 the separation system has a mechanical screen structure and additionally water spray apparatuses. After processing in the separation system, ice blocks with at least some oil remaining on their surface are conveyed into a collection space in the recovery vessel. A problem of the method and system presented in the publication is that the collection process cannot be made continuous. This is because, as soon as the collection space of the recovery vessel is filled with ice and oil, the vessel must be unloaded before the oil recovery can be continued. Often there is no nearby location available for unloading, so eliminating the necessity of transporting away anything else but the collected oil would be important. Filling the collection space unnecessarily with pieces of ice is not practical.

Due to what is presented above, the traditional known methods have been little used and it is obviously important to develop more efficient methods for recovering oil in Arctic conditions in case of oil disasters.

### PURPOSE OF THE INVENTION

The purpose of this invention is to create a method and a vessel with an apparatus overcoming the above-mentioned drawbacks. The purpose of the invention is furthermore to create a method and an apparatus which make it possible to more efficiently collect spilt oil in cold, Arctic ice conditions, where the oil has often become tightly affixed to the surface of the ice. By means of the invention, the oil can be more easily and quickly loosened from the surface of the ice.

### CHARACTERISTICS OF A METHOD ACCORDING TO THE INVENTION

A method according to the invention is characterized in that, to loosen oil adhering or affixed to ice, the surface of the ice is treated with warm or hot oil.

By means of the invention, oil adhering or affixed to ice can be effectively loosened without producing a large quantity of problematic water and oil emulsion, such as in known methods aiming to loosen oil by means of hot water or hot vaporized water.

### EMBODIMENTS OF THE METHOD ACCORDING TO THE INVENTION

A preferred embodiment of the method according to the invention is characterized in that warm or hot oil is sprayed onto oil adhering to the surface of ice. An alternative course of action is that a piece of ice to which oil has adhered is placed in a basin or tank containing warm or hot oil. To make the cleaning of the ice or a piece of ice more efficient, in addition to the warm or hot oil treatment, at least one jet of compressed air is directed at the surface of the ice prior to the warm or hot oil treatment and/or after the treatment. In addition to the warm or hot oil treatment, the piece of ice can additionally be taken placed in a basin containing warm or hot water.

Another preferred embodiment of the method according to the invention is characterized in that, to loosen oil adhering to ice, a piece of ice in cold water is taken into an oil recovery vessel where the surface of the piece of ice is treated with warm or hot oil and, if necessary, also with compressed air and hot water, after which the cleaned piece of ice is conveyed back to the water.

A third preferred embodiment of the method according to the invention is characterized in that oil similar to or of the same type as the oil to be loosened from the ice is used for the treatment of the ice or piece of ice by means of warm or hot oil. Thus, according to yet another preferred embodiment, the oil loosened from the piece of ice is warmed or heated up and used for the treatment of another piece of ice by means of warm or hot oil.

### CHARACTERISTICS OF AN APPARATUS ACCORDING TO THE INVENTION

A vessel with an apparatus according to the invention is characterized in what is described in the characterizing part of the independent apparatus claim.

The apparatus comprises at least one stream nozzle to spray warm or hot oil and to direct According to a preferred embodiment, it at oil adhering to ice or to a piece of ice. the apparatus comprises a basin or a tank with warm or hot oil in it and a transfer member to convey the piece of ice into the basin or tank containing warm or hot oil.

Another embodiment of the apparatus-comprises at least one compressed-air nozzle to direct and aim compressed air at the surface of a piece of ice prior to and/or after the warm or hot oil treatment is directed at the piece of ice. According to one alternative, the apparatus comprises a hot water basin and a conveyor for taking the piece of ice into the hot water basin after the piece of ice has been brought in contact with warm or hot oil.

According to yet another embodiment the apparatus comprises an oil tank or a basin containing the same or similar type of oil as the oil to be loosened from the ice. It can also be the same oil as that is loosened from the ice.

### EXAMPLES OF EMBODIMENTS

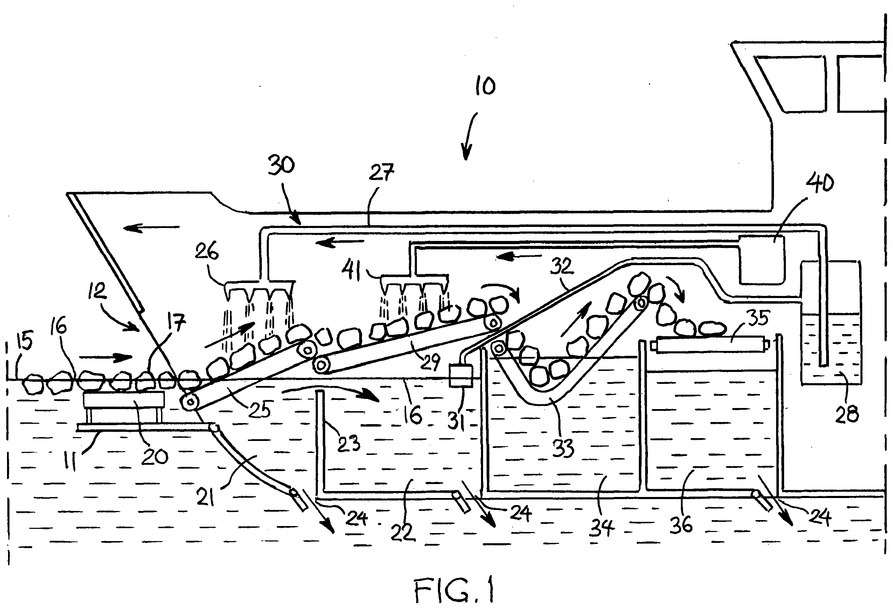

appended drawing, wherein Figure 1 shows a schematic side view of an oil recovery vessel according to the invention.

Fig. 1 schematically shows an oil recovery vessel 10 according to a preferred embodiment of the invention, wherein the bow is a hatch 11 that can be opened and forms a bow gate, by opening of which an oil recovery opening 12 is formed in the opening of the hatch 11. This oil recovery opening 12 is such located at the waterline of the oil recovery vessel 10 that the oil recovery opening 12 reaches both below the surface of the water 15 and above it.

The direction of motion of the oil recovery vessel 10 is marked by an arrow such that it is to the left in Fig. 1. This way oil 16 on the surface of the water 15 and oily pieces of ice 17 in the water are carried through the oil recovery opening 12 of the oil recovery vessel 10 into the oil recovery vessel 10.

In the example shown in Fig. 1, there is a separation screen 20 in conjunction with the hatch 11 in the bow gate of the oil recovery vessel 10, the purpose of which is to agitate pieces of ice 17 on the surface of the water 15 such that at least some of the oil adhering to the pieces of ice 17 are loosened already at this stage. The possibly loosened oil is carried on the water's surface along with the water flow into the collection space 21 of the oil recovery vessel 10 and from thereon into another collection space 22. The separation screen 20 is not always necessary, however, nor is it useful if the oil has already become tightly affixed to the pieces of ice 17.

The collection space 21 and the other collection space 22 are connected to each other such that there is a separation bulkhead 23 between them, extending almost to the surface of the water, and the oil on the water's surface, being lighter than water, can enter the collection space 22 from the collection space 21 over the bulkhead. The water can exit through outlets 24 located at the bottom of both the collection spaces 21 and 22. The collection space 22 can also be a storage tank of the oil recovery vessel 10, but the oil on the water's surface in the collection spaces 21 and 22 can be further transferred to the storage spaces proper of the recovery vessel or of another vessel, for transportation away from the site. This detail is not shown in Fig. 1.

In Fig. 1, the pieces of ice 17 coming in through the hatch 11 in the bow gate of the oil recovery vessel 10 are guided to a conveyor 25 whereon they are submitted to a treatment with hot oil. A hot oil apparatus 30 comprises an oil heater 28, an oil pipe 27 and stream nozzles 26 for oil. When hot oil is sprayed onto the pieces of ice 17, the hot oil will trap oil affixed to the ice and drain into the collection space 21 located below. Appropriately heated oil is applicable for flushing oil found on the surface of a piece of ice. This way the oil will rapidly loosen from the surface of the pieces of ice 17 and drop into a collection space 21 located below the mesh-like conveyor 25 without forming a harmful emulsion of water and oil.

A method according to the invention prevents the forming of a problematic emulsion because the target for the hot oil is the oil on the surface of the ice and oil is directed at it only for as long as is required to loosen it. The cleaned piece of ice is transferred, in a continuous process, outside the collection space by means of conveyors. An amount of oil accumulated in the collection space is transferred into an oil warming or heating unit as required by the continuous process. Excess oil accumulated in the collection space 21 is transferred into the next collection space via an adjustable overflow edge of the bulkhead 23.

The collection spaces 21 and 22 can be divided by bulkheads 23 into several sequential and/or parallel parts, upon which the conveyors 25 and 29 for the pieces of ice 17 are arranged. The conveyors can extend outside the collection edge and below the waterline, as does the conveyor 33. The conveyors are most preferably mesh-like conveyor belt systems, and there can be one or more of them.

The oil to be heated up can be the oil loosened from the blocks of ice 17, in which case the oil to be heated up can be collected from the surface of the collection space 22 via a suction inlet 31 and a suction pipe 32 into the oil heater 28. Oil stream nozzles 26 can be located below the conveyor belt 25, whereby oil can be directed via the nozzles 26 also at the bottom and lateral surfaces of the pieces of ice 17.

The loosening of the oil from the surface of the pieces of ice 17 is further intensified along the conveyor 29 through the blowing of compressed air directed at the pieces of ice 17, via the compressed air nozzles 41 of the compressed air apparatus 40.

Compressed air nozzles 41 may also be located at suitable locations elsewhere throughout the entire process. After this, the pieces of ice 17 are conveyed by means of the conveyor 33 into a hot water basin 34 where the rest of the oil is loosened from the surface of the pieces of ice 17. This may further be succeeded by the blowing of compressed air, not shown in Fig. 1, and the clean pieces of ice 17 transfer onto the conveyor 35 and continue back to the water via a side hatch in the oil recovery vessel 10 and exit the oil recovery vessel 10.

When the conveyor 33 from time to time goes under the surface, it enables any thin film of oil possibly still clinging to the pieces of ice to be flushed away. It can also be removed by a jet of hot steam before removing the piece of ice from the collection space. Using steam in this last stage does not generate significant amounts of water in the collection space. The emulsion resulting from this stage can be transported for further processing to a processing plant. In such a case no separation is required because the emulsified water is not returned into the body of water.

Cleaning of the pieces of ice is carried out by means of heated oil, for which purpose groups of oil stream nozzles are arranged in various areas of the conveyors, most preferably at the starting end of the series of conveyors, above the first collection space 21. The second collection space 22 may be a storage tank, which the oil collected in the first collection space 21 can transfer into via the said overflow edge 23.

The third tank 34 can, for example, be a warm-water tank. At this tank, the conveyor 33 may be installed such that it moves below the waterline in the tank 34, at a suitable depth, flushing the blocks of ice on the conveyor, and rises back above the waterline. After this the blocks of ice are directed above a fourth tank 36 where, if necessary, any thin film of oil still remaining on the pieces of ice is removed by means of pressurised steam before the pieces of ice are removed outside the collection space and at the same time also outside the recovery vessel 10.

The method according to the invention prevents the problematic generation of an emulsion, whereby the use of separators becomes unnecessary.

### ADDITIONAL NOTES

It is obvious to a person skilled in the art that the different embodiments of the invention may vary within the scope of the claims presented below.

### LIST OF REFERENCE NUMBERS

- 10: Oil recovery vessel
- 11: Hatch
- 12: Oil recovery opening
- 15: Surface of water
- 16: Oil on the surface of water
- 17: Piece of ice
- 20: Separation screen
- 21: Collection space
- 22: Collection space
- 23: Separation bulkhead
- 24: Water outlet
- 25: Conveyor
- 26: Oil stream nozzle
- 27: Oil pipe
- 28: Oil heater
- 29: Conveyor
- 30: Hot-oil apparatus
- 31: Suction inlet
- 32: Suction pipe
- 33: Conveyor
- 34: Hot-water basin
- 35: Conveyor
- 36: Basin
- 40: Compressed air apparatus
- 41: Compressed air nozzle

## Claims

1. A method for loosening oil that has adhered or become affixed to ice in cold conditions, **characterized in that**, to loosen oil adhering or affixed to ice (17), the surface of the ice is treated with warm or hot oil.

2. A method according to claim 1, **characterized in that** warm or hot oil is sprayed onto the oil adhering to the surface of ice (17).

3. A method according to claim 1, **characterized in that** a piece of ice (17) to which oil has adhered is taken into a basin or tank containing warm or hot oil.

4. A method according to any one of claims 1, 2 or 3, **characterized in that**, in addition to the warm or hot oil treatment, at least one jet of compressed air is directed at the surface of the ice prior to the warm or hot oil treatment and/or after the treatment.

5. A method according to any one of claims 1 to 4, **characterized in that**, in addition to the warm or hot oil treatment, the piece of ice is placed in a basin (36) containing warm or hot water.

6. A method according to any one of claims 1 to 5, **characterized in that**, to loosen oil adhering to ice, a piece of ice (17) in cold water is taken into an oil recovery vessel (10) where the surface of the piece of ice is treated with warm or hot oil and, if necessary, also with compressed air and hot water, after which the cleaned piece of ice is conveyed back to the water.

7. A method according to any one of claims 1 to 6, **characterized in that** oil similar to or of the same type as the oil to be loosened from the ice is used for the treatment of the ice or piece of ice (17) by means of warm or hot oil.

8. A method according to any one of claims 1 to 7, **characterized in that** the oil loosened from the piece of ice (17) is warmed or heated up and used for the treatment of another piece of ice by means of warm or hot oil.

9. A vessel with an apparatus for loosening oil that has adhered or become affixed to pieces of ice (17) in cold water, the apparatus locating on the oil recovery vessel (10) and having a conveyor (25) located in the oil recovery opening (12) of the oil recovery vessel (10) for taking pieces of ice (17) from the cold water into the oil recovery vessel,
**characterized in that** the apparatus comprises:
- an oil tank with an oil heater (28) for warming or heating up oil, and
- at least one oil stream nozzle (26) located by the conveyor (25) to spray the warmed-up or heated-up oil, whereby the pieces of ice (17) are guided to said conveyor (25) whereon they are submitted to a treatment with hot oil by the at least one oil stream nozzle (26) and to direct said oil in contact with the oil adhering or affixed to the pieces of ice (17) for loosening the oil adhered or affixed to the pieces of ice without forming a harmful emulsion of water and oil.

10. A vessel according to claim 9, **characterized in that** the apparatus comprises:
- a basin or a tank with warm or hot oil in it, and
- a transfer member to convey the piece of ice (17) into the basin or tank containing warm or hot oil.

## Patentansprüche

1. Ein Verfahren zur Loslösung von Öl, das sich unter kalten Bedingungen an Eis (17) festgesetzt hat, **dadurch gekennzeichnet, dass**, um das festgesetzte Eis loszulösen, die Oberfläche des Eises mit warmem oder heißem Öl behandelt wird.

2. Ein Verfahren gemäß Patentanspruch 1, **dadurch gekennzeichnet, dass** warmes oder heißes Öl auf das Öl, welches sich auf der Oberfläche des Eises (17) festgesetzt hat, aufgesprüht wird.

3. Ein Verfahren gemäß Patentanspruch 1, **dadurch gekennzeichnet, dass** ein Stück Eis (17), auf dem sich Öl festgesetzt hat, in ein Becken oder einen Tank mit warmem oder heißem Öl eingebracht wird.

4. Ein Verfahren gemäß Patentanspruch 1, 2 oder 3, **dadurch gekennzeichnet, dass** zusätzlich zu der Behandlung mit warmem oder heißem Öl mindestens ein Strahl Druckluft auf die Oberfläche des Eises gerichtet wird, vor der Behandlung mit warmem oder heißem Öl und/oder nach der Behandlung.

5. Ein Verfahren gemäß einem der Patentansprüche 1-4,
**dadurch gekennzeichnet, dass** zusätzlich zu der Behandlung mit warmem oder heißem Öl das Stück Eis in ein Becken (36) mit warmem oder heißem Wasser platziert wird.

6. Ein Verfahren gemäß einem der Patentansprüche 1-5,
**dadurch gekennzeichnet, dass**, um an Eis festgesetztes Öl abzulösen, ein Stück Eis (17) in kaltem Wasser in ein Ölrückgewinnungsschiff (10) eingebracht wird, wo die Oberfläche des Eisstücks mit warmem oder heißem Öl und, sofern nötig, auch mit Druckluft und heißem Wasser behandelt wird, wonach das gereinigte Stück Eis ins Wasser zurückbefördert wird.

7. Ein Verfahren gemäß einem der Patentansprüche 1-6,
**dadurch gekennzeichnet, dass** zur Behandlung des Eises oder Eisstücks (17) mit warmem oder heißem Öl ein Öl verwendet wird, das ähnlich oder vom selben Typus ist wie das vom Eis loszulösende Öl.

8. Ein Verfahren gemäß einem der Patentansprüche 1-7,
**dadurch gekennzeichnet, dass** das vom Eisstück (17) losgelöste Öl erwärmt oder erhitzt wird und zur Behandlung eines anderen Eisstücks mit warmem oder heißem Öl verwendet wird.

9. Ein Schiff mit einer Vorrichtung zum Loslösen von Öl, das sich an Eisstücken (17) festgesetzt hat, in kaltem Wasser, wobei sich die Vorrichtung auf dem Ölrückgewinnungsschiff (10) befindet und einen Förderer (25) besitzt, der in der Ölrückgewinnungsöffnung (12) des Ölrückgewinnungsschiffs (10) angebracht ist, um Eisstücke (17) aus dem kalten Wasser in das Ölrückgewinnungsschiff zu befördern, **dadurch gekennzeichnet, dass** die Vorrichtung Folgendes umfasst:
- einen Öltank mit einem Ölerhitzer (28) zum Erwärmen oder Erhitzen von Öl und
- mindestens eine Ölausströmdüse (26), die sich beim Förderer (25) befindet, um das erwärmte oder erhitzte Öl zu versprühen, wodurch die Eisstücke (17) zu dem besagten Förderer (25) hingelenkt werden, worauf sie einer Behandlung mit heißem Öl durch die mindestens eine Ölausströmdüse (26) unterzogen werden, und um das besagte Öl in Kontakt mit dem an den Eisstücken (17) festgesetzten oder anhaftenden Öl zu bringen, um das an den Eisstücken (17) festgesetzte oder anhaftende Öl loszulösen, ohne eine schädliche Emulsion von Wasser und Öl zu bilden.

10. Ein Schiff gemäß Patentanspruch 9, **dadurch gekennzeichnet, dass** die Vorrichtung Folgendes umfasst:
- ein Becken oder einen Tank mit warmem oder heißem Öl darin und
- ein Transportelement, um das Eisstück (17) in das Becken oder den Tank mit warmem oder heißem Öl zu befördern.

## Revendications

1. Méthode pour détacher l'huile qui a adhéré ou qui est devenue fixée à de la glace dans des conditions froides, **caractérisée en ce que**, pour détacher l'huile adhérant ou fixée à la glace (17), la surface de la glace est traitée avec de l'huile chaude.

2. Méthode selon la revendication 1, **caractérisée en ce que** de l'huile chaude est vaporisée sur l'huile adhérant à la surface de la glace (17).

3. Méthode selon la revendication 1, **caractérisée en ce qu'**un morceau de glace (17) auquel de l'huile a adhéré est entraîné dans un bassin ou un réservoir contenant de l'huile chaude.

4. Méthode selon l'une quelconque des revendications 1, 2 ou 3, **caractérisée en ce que**, en plus du traitement à l'huile chaude, au moins un jet d'air comprimé est dirigé sur la surface de la glace avant le traitement à l'huile chaude et/ou après le traitement.

5. Méthode selon l'une quelconque des revendications 1-4, **caractérisée en ce que**, en plus du traitement à l'huile chaude, le morceau de glace est placé dans un bassin (36) contenant de l'eau chaude.

6. Méthode selon l'une quelconque des revendications 1-5, **caractérisée en ce que**, pour détacher l'huile adhérant à la glace, un morceau de glace (17) dans de l'eau froide est entraîné vers un navire de récupération d'huile (10) où la surface du morceau de glace est traitée à l'huile chaude et, au besoin, aussi à l'air comprimé et à l'eau chaude, après quoi le morceau de glace nettoyé est retourné dans l'eau.

7. Méthode selon l'une quelconque des revendications 1-6, **caractérisée en ce que** de l'huile similaire à ou du même type que celle qui doit être détachée de la glace est utilisée pour le traitement de la glace ou du morceau de glace (17) au moyen d'huile chaude.

8. Méthode selon l'une quelconque des revendications 1-7, **caractérisée en ce que** l'huile détachée du morceau de glace (17) est chauffée et utilisée pour le traitement d'un autre morceau de glace au moyen d'huile chaude.

9. Navire avec un appareil pour détacher l'huile qui a adhéré ou est devenue fixée à des morceaux de glace (17) dans l'eau froide, l'appareil se trouvant sur le navire de récupération d'huile (10) et comprenant un convoyeur (25) situé dans l'ouverture de récupération d'huile (12) du navire de récupération d'huile (10) pour entraîner des morceaux de glace (17) à partir de l'eau froide vers le navire de récupération d'huile,
**caractérisé en ce que** l'appareil comporte :
- un réservoir à huile avec un réchauffeur d'huile (28) pour le réchauffage de l'huile, et
- au moins une buse à jet pour l'huile (26) située près du convoyeur (25) pour vaporiser l'huile réchauffée, les morceaux de glace (17) étant dirigés vers ledit convoyeur (25) sur lequel ils sont soumis à un traitement à l'huile chaude par l'au moins une buse à jet pour l'huile (26) et pour diriger ladite huile en contact avec l'huile adhérant ou fixée aux morceaux de glace (17) pour détacher l'huile qui a adhéré ou est fixée aux morceaux de glace sans former une émulsion nocive d'eau et d'huile.

10. Navire selon la revendication 9, **caractérisé en ce que** l'appareil comporte :
- un bassin ou un réservoir contenant de l'huile chaude, et
- un membre de transfert pour transporter le morceau de glace (17) vers le bassin ou le réservoir contenant de l'huile chaude.
